# EUROPÄISCHE PATENTANMELDUNG

(11) **EP 0 681 945 A2**
(43) Veröffentlichungstag der Anmeldung: **15.11.1995**
(21) Anmeldenummer: 95105984.9
(22) Anmeldetag: 21.04.1995
(51) Int. Cl.: B60R 16/02

(54) **Vorrichtung zum Steuern von motorisch betätigbaren Teilen eines Kraftfahrzeugs**

(30) Priorität: 13.05.1994 DE 4416878
(71) Anmelder: ROBERT BOSCH GMBH, 70442 Stuttgart (DE)
(72) Erfinder: Mohr, Thomas, Dipl.-Ing., D-77815 Buehl (DE); Kremser, Rolf, Dipl.-Ing., D-77743 Neuried (DE); Diebold, Bend, Dipl.-Ing., D-77866 Rheinau (DE)

(57) **Zusammenfassung**

Es wird eine Vorrichtung zum Steuern von motorisch betätigbaren Teilen (10, 16) eines Kraftfahrzeugs vorgeschlagen, die in wenigstens zwei unterschiedliche Positionen bewegbar sind. Die Positionen der motorisch betätigbaren Teile (10, 16) werden mit Positionssollwertgebern (11, 15) vorgegeben, die jeweils erste Positionssollwerte (Sn1, Sm1) bereitstellen. Vorgesehen sind Schaltmittel (18) zum Hin- und Herschalten zwischen den ersten Positionssollwerten (Sn1, Sm1) und zweiten, fest vorgegebenen Positionssollwerten (Sn2, Sm2). Sämtliche in die Vorrichtung eingebundene motorisch betätigbare Teile (10, 16) nehmen gegebenenfalls die Positionen ein, die den zweiten, fest vorgegebenen Positionssollwerten (Sn2, Sm2) entsprechen. Die erfindungsgemäße Vorrichtung erleichtert beispielsweise das Benutzen einer Kraftfahrzeugwaschanlage oder Kraftfahrzeugwaschstraße dadurch, daß die zweiten Positionssollwerte (Sn2, Sm2) solchen Positionen der motorisch bewegbaren Teile (10, 16) entsprechen, bei denen eine Beschädigungswahrscheinlichkeit der motorisch betätigbaren Teile (10, 16) oder des Innenraums des Kraftfahrzeugs reduziert ist.

## Beschreibung

### Stand der Technik

Die Erfindung geht aus von einer Vorrichtung zum Steuern von motorisch betätigbaren Teilen eines Kraftfahrzeugs nach der Gattung des unabhängigen Anspruchs.

Aus der DE-PS 33 24 107 ist eine Betätigungseinrichtung für Schiebe-Hebedächer von Kraftfahrzeugen bekannt, die einen Regelkreis enthält, der das Schiebe-Hebedach in eine Position bringt, die mit einem vorgegebenen Positionssollwert übereinstimmt. Der Positionssollwert wird über einen Sollwertgeber von einer Bedienperson festgelegt.

In der EP-A 0 100 852 ist eine Schaltungsanordnung zum Ein- und Ausfahren einer motorbetriebenen Antenne eines Kraftfahrzeugs beschrieben. Ein Potentiometer ermöglicht die Vorgabe von unterschiedlichen Positionssollwerten. In einer einfachen Ausgestaltung ist die Vorgabe von zwei festen Positionssollwerten vorgesehen, die beispielsweise dem eingefahrenen und dem vollständig ausgefahrenen Zustand entsprechen. Die vorgegebenen Positionssollwerte werden nach dem Betätigen des Ein- und Ausschalters eines Autoradios von der Antenne angefahren.

Aus der DE-A 36 09 688 ist eine Sitz-Spiegel-Verstelleinrichtung eines Kraftfahrzeugs bekannt. Der Fahrer des Kraftfahrzeugs kann über eine Positionssollwerteingabe sowohl die Position des Außen- als auch des Innenspiegels sowie des Sitzes individuell einstellen. Eine Speichereinrichtung ermöglicht die Eingabe von unterschiedlichen Sollwertsätzen, die für unterschiedliche Fahrer gelten.

Der Erfindung liegt die Aufgabe zugrunde, eine Vorrichtung zum Steuern von motorisch betätigbaren Teilen eines Kraftfahrzeugs anzugeben, die eine weitere Erhöhung des Komforts ermöglicht.

Die Aufgabe wird durch die im Hauptanspruch angegebenen Merkmale gelöst.

### Vorteile der Erfindung

Die erfindungsgemäße Vorrichtung ermöglicht einen Zugriff gleichzeitig auf mehrere motorisch betätigbare Teile des Kraftfahrzeugs. Positionssollwerte, die von den jeweils den motorisch betätigbaren Teilen zugeordneten Sollwertgebern bereitgestellt sind, werden zentral in zweite, fest vorgegebene Positionssollwerte für jedes motorisch betätigbare Teil geändert. Vorgesehen sind Schaltmittel zum Hin- und Herschalten zwischen den ersten, individuell vorgegebenen Positionssollwerten und den zweiten, fest vorgegebenen Positionssollwerten für sämtliche motorisch betätigbare Teile. Der wesentliche Vorteil der erfindungsgemäßen Vorrichtung liegt darin, daß in bestimmten Betriebssituationen lediglich ein Schalter zu betätigen ist, um sämtliche motorisch betätigbare Teile aus den gerade vorliegenden, individuell vorgegebenen Positionen in die zweiten, fest vorgegebenen Positionen zu bewegen.

Vorteilhafte Ausgestaltungen und Weiterbildungen der erfindungsgemäßen Vorrichtung ergeben sich aus abhängigen Ansprüchen.

Eine besonders vorteilhafte Ausgestaltung sieht vor, daß die zweiten, fest vorgegebenen Positionssollwerte solchen Sollwerten entsprechen, bei denen eine Beschädigungswahrscheinlichkeit der Teile oder des Kraftfahrzeugs, insbesondere des Innenraums des Kraftfahrzeugs, bei einer Kraftfahrzeugreinigung reduziert ist. Mit dieser Maßnahme wird einem Fahrzeugführer das Benutzen einer Autowaschanlage oder einer Waschstraße erleichtert. Die motorisch betätigbaren Teile können in eine, von einem Betreiber der Waschanlage empfohlene sichere Position gebracht werden durch Zugriff auf lediglich einen Schalter.

Vorteilhafter Weise sind als motorisch betätigbare Teile die Außenspiegel und/oder die Scheiben und/oder das Schiebedach und/oder die Antenne vorgesehen. Die Beschädigungswahrscheinlichkeit der motorisch betätigbaren Teile oder insbesondere des Innenraums des Kraftfahrzeugs bei einer Kraftfahrzeugreinigung wird reduziert bei einem Anlegen der Außenspiegel und/oder bei einem Schließen der Fenster und/oder bei einem Schließen des Schiebedachs und/oder bei einem Einfahren der Antenne. Die bislang erforderliche getrennte Vorgabe von neuen Positionssollwerten separat für jedes motorisch betätigbare Teil entfällt.

Eine vorteilhafte Weiterbildung sieht vor, daß bei einem Einfahren der Antenne, obwohl das Radiogerät eingeschaltet ist, ein entsprechender Texthinweis erfolgt oder beispielsweise ein automatisches Umschalten auf Kassetten- oder CD-Betrieb vorgenommen wird.

In einer einfachen Ausgestaltung der erfindungsgemäßen Vorrichtung ist das Schaltmittel als separater Schalter ausgebildet. In einer anderen vorteilhaften Ausgestaltung ist vorgesehen, daß eine Mehrfachbelegung eines vorhandenen Schalters vorgenommen wird. Eine Mehrfachbelegung kann beispielsweise durch eine zeitliche Codierung realisiert werden.

Die erfindungsgemäße Vorrichtung eignet sich zur Verwendung bei unabhängig voneinander arbeitenden motorisch betätigbaren Teilen, wobei eine zusätzliche Verkabelung zwischen den einzelnen Teilen erforderlich wird. Besonders einfach ist die erfindungsgemäße Vorrichtung realisierbar bei motorisch betätigbaren Teilen, die im Rahmen eines Multiplexsystems elektrisch miteinander verbunden sind. Bei einem solchen Multiplexsystem werden im Extremfall über eine einzige Verbindungsleitung, an der sämtliche Teile angeschlossen sind, seriell Informationen ausgetauscht.

Weitere vorteilhafte Ausgestaltungen und Weiterbildungen der erfindungsgemäßen Vorrichtung ergeben sich aus weiteren abhängigen Ansprüchen in Verbindung mit der folgenden Beschreibung.

### Zeichnung

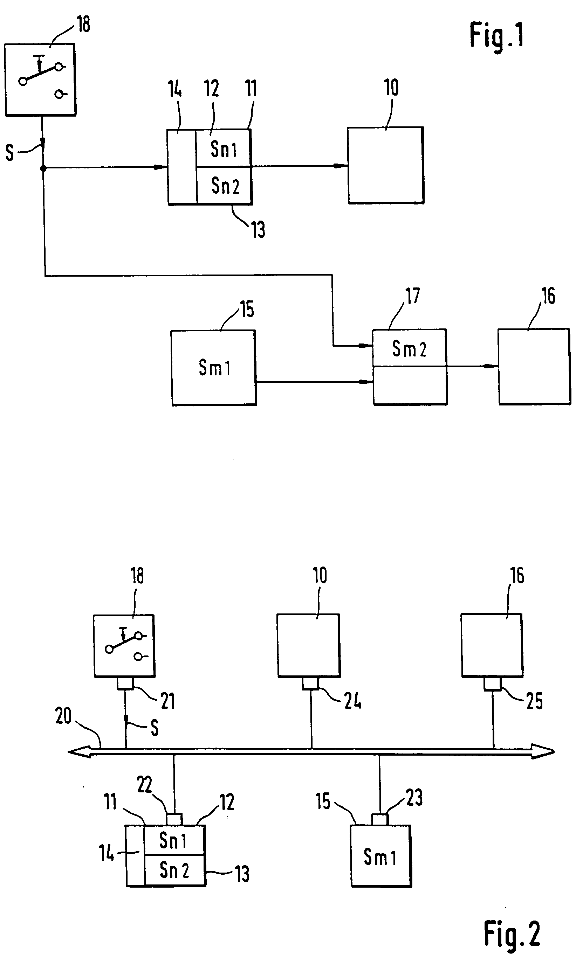

Figur 1 zeigt ein erstes Blockschaltbild einer Ausgestaltung einer erfindungsgemäßen Vorrichtung zum Steuern von motorisch betätigbaren Teilen eines Kraftfahrzeugs und Figur 2 zeigt ein Blockschaltbild einer anderen vorteilhaften Ausgestaltung.

Figur 1 zeigt ein erstes motorisch betätigbares Teil 10, dessen Position von einem ersten Positionssollwertgeber 11 vorgegeben wird. Der erste Positionssollwertgeber 11 enthält eine erste Positionssollwertvorgabe 12 und eine zweite Positionssollwertvorgabe 13. Die erste Positionssollwertvorgabe 12 gibt einen ersten Positionssollwert Sn1 und die zweite Positionssollwertvorgabe 13 gibt einen zweiten Positionssollwert Sn2 vor. Eine im ersten Positionssollwertgeber 11 enthaltene erste Auswahlvorrichtung 14 wählt zwischen dem ersten und zweiten Positionssollwert Sn1 und dem zweiten Positionssollwert Sn2 aus.

Ein zweiter Positionssollwertgeber 15 gibt einen ersten Positionssollwert Sm1 für ein zweites motorisch betätigbares Teil 16 vor. Zwischen dem zweiten Positionssollwertgeber 15 und dem zweiten motorisch betätigbaren Teil 16 ist eine Vorrangschaltung 17 angeordnet, die entweder den vom zweiten Positionssollwertgeber 15 abgegebenen ersten Positionssollwert Sm1 für das zweite motorisch betätigbare Teil 16 passieren läßt oder einen zweiten Sollwert Sm2 ausgibt. Die Umschaltung erfolgt mit einem Schaltsignal S, das von Schaltmitteln 18 abgegeben wird.

Die erfindungsgemäße Vorrichtung gemäß Figur 1 arbeitet folgendermaßen:
Die motorisch betätigbaren Teile 10, 16 sind in einem Kraftfahrzeug angeordnet. Solche Teile sind beispielsweise die Außenspiegel, der Innenspiegel, und/oder die Scheiben und/oder ein Schiebedach oder Schiebe-Hebedach und/oder eine Antenne eines nicht näher gezeigten Autoradios. Bei Kraftfahrzeugen mit höherwertiger Ausstattung sind die motorisch betätigbaren Teile 10, 16 jeweils mit Elektromotoren in unterschiedliche Positionen bewegbar. Jedem Teil 10, 16 ist im allgemeinen ein Positionssollwertgeber 11, 15 zugeordnet, der jeweils erste Positionssollwerte Sn1, Sm1 für die zugeordneten Teile 10, 16 vorgibt. Die ersten Positionssollwerte Sn1, Sm1 sind im allgemeinen von einer Bedienperson über eine in der Figur nicht näher gezeigte Vorrichtung variabel vorgebbar.

Erfindungsgemäß sind die Schaltmittel 18 vorgesehen, die für sämtliche motorisch betätigbaren Teile 10, 16 die Vorgabe von jeweils zweiten Positionssollwerten Sn2, Sm2 veranlassen. Der Vorteil dieser Maßnahme liegt darin, daß sämtliche Teile 10, 16 gleichzeitig Positionen einnehmen, die den zweiten Positionssollwerten Sn2, Sm2 entsprechen.

Das von den Schaltmitteln 18 abgegebene Schaltsignal S veranlaßt die im ersten Positionssollwertgeber 11 angeordnete Auswahlvorrichtung 14 von der ersten Positionssollwertvorgabe 12 auf die zweite Positionssollwertvorgabe 13 zu schalten. Anstelle des ersten Positionssollwerts Sn1 für das erste motorisch betätigbare Teil 10 wird dann der zweite Positionssollwert Sn2 für das erste motorisch betätigbare Teil 10 ausgegeben. Der zweite Positionssollwert Sn2 entspricht einer Position des ersten motorisch betätigbaren Teils 10, die beispielsweise einer angeklappten Position bei Außenspiegeln und/oder der geschlossenen Position bei Fenstern und/oder der geschlossenen Position bei einem Schiebedach und/oder der eingefahrenen Position einer Antenne entspricht.

Das von den Schaltmitteln 18 abgegebene Schaltsignal S veranlaßt die Vorrangschaltung 17 zum Ausgeben des zweiten Positionssollwerts Sm2 für das zweite motorisch betätigbare Teil 16 anstelle der Weiterleitung des vom zweiten Positionssollwertgeber 15 bereitgestellten ersten Positionssollwerts Sm1 für das zweite motorisch betätigbare Teil 16. In Abhängigkeit von der Ausgestaltung der Positionssollwerte Sm1, Sm2 für das zweite motorisch betätigbare Teil, kann gegebenenfalls unmittelbar das Schaltsignal S als zweiter Positionssollwert Sm2 angesehen werden. Dies ist insbesondere in denjenigen Fällen möglich, bei denen das motorisch betätigbare Teil 10, 16 wenigstens eine Position aufweist, die häufig einzunehmen ist. Ein Beispiel ist die Antenne, wobei die Vorzugsposition beispielsweise der eingefahrene Zustand ist. In einer einfachen Ausgestaltung, beispielsweise bei der Positionierung einer Antenne als motorisch betätigbares Teil 10, 16 entspricht der erste Positionssollwert Sn1, Sm1 ebenfalls einem Schaltsignal, das zwei Zustände einnimmt. Das vorrangig zu beachtende Schaltsignal S der Schaltmittel 18 entspricht einem dieser Schaltzustände der Positionssollwerte. Gegebenenfalls ist in der Vorrangschaltung 17 eine Anpassung vorzunehmen, die dem Schaltsignal S den tatsächlich benötigten zweiten Positionssollwert Sm2 zuordnet, der dann gegebenenfalls an das zweite motorisch betätigbare Teil 16 weitergeleitet wird.

In Figur 2 ist ein Ausführungsbeispiel gezeigt, bei dem die Schaltmittel 18, die beiden Positionssollwertgeber 11, 15 sowie die beiden motorisch betätigbaren Teile 10, 16 an zumindest einer gemeinsamen Datenleitung 20 angeschlossen sind. Die wenigstens eine gemeinsame Datenleitung 20 ist Teil eines Multiplexsystems, an dem einzelne Teilnehmer angeschlossen sind, die untereinander einen Informationsaustausch vornehmen. Die Schaltmittel 18 enthalten eine erste Sendeeinrichtung 21, der erste Positionssollwertgeber 11 enthält eine Sende-/Empfangseinrichtung 22, der zweite Positionssollwertgeber 15 eine zweite Sendeeinrichtung 23, das erste motorisch betätigbare Teil 10 eine erste Empfangseinrichtung 24 und das zweite motorisch betätigbare Teil 16 eine zweite Empfangseinrichtung 25.

Das in Figur 2 gezeigte Ausführungsbeispiel der erfindungsgemäßen Vorrichtung zum Steuern von motorisch betätigbaren Teilen 10, 16 arbeitet folgendermaßen:
Das von den Schaltmitteln 18 abgegebene Schaltsignal S kann über die wenigstens eine gemeinsame Datenleitung 20 sowohl zum ersten Positionssollwertgeber 11 als auch zu den motorisch betätigbaren Teilen 10, 16 übermittelt werden. Sofern das Schaltsignal S zum ersten Positionssollwertgeber 11 übermittelt wird, legt es auf die bereits beschriebene Weise mittels der Auswahlvorrichtung 14 fest, daß anstelle des ersten Positionssollwerts Sn1 der zweite Positionssollwert Sn2 ausgegeben wird. Die Positionssollwerte Sn1, Sn2 sind beispielsweise, wie im Ausführungsbeispiel gemäß Figur 1, für das erste motorisch betätigbare Teil 10 vorgesehen. Das erste motorisch betätigbare Teil 10 erhält über die erste Empfangseinrichtung 24 den einen oder den anderen Positionssollwert Sn1, Sn2 zugeführt und kann die entsprechende Position anfahren.

Entsprechend dem in Figur 1 gezeigten Ausführungsbeispiel kann dem zweiten motorisch betätigbaren Teil 16 das von den Schaltmitteln 18 abgegebene Schaltsignal S unmittelbar zugeleitet werden. Der zweite Positionssollwertgeber 15 gibt weiterhin den ersten Positionssollwert Sm1 aus, der für das zweite motorisch betätigbare Teil 16 bestimmt ist. Empfangen werden vom zweiten motorisch betätigbaren Teil 16 über die zweite Empfangseinrichtung 25 entweder der vom zweiten Positionssollwertgeber 15 bereitgestellte erste Positionssollwert Sm1 oder das von den Schaltmitteln 16 abgegebene Schaltsignal S, dem der zweite Positionssollwert Sm2 für das zweite motorisch betätigbare Teil 16 entspricht. Die in Figur 1 gezeigte Vorrangschaltung 17 ist bei dem in Figur 2 gezeigten Ausführungsbeispiel im allgemeinen nicht erforderlich, weil der vom zweiten Positionssollwertgeber 15 bereitgestellte erste Positionssollwert Sm1 nur für die kurze Zeit der Übertragung über die wenigstens eine gemeinsame Datenleitung 20 vom zweiten motorisch betätigbaren Teil empfangen wird. Beim Auftreten des Schaltsignals S interpretiert das zweite motorisch betätigbare Teil 16 das Schaltsignal S lediglich als neuen Positionssollwert, der dem zweiten vorgegebenen Positionssollwert Sm2 entspricht. Gegebenenfalls muß das Schaltsignal S in den zweiten Positionssollwert Sm2 umcodiert werden.

Die Schaltmittel 18 sind beispielsweise als ein separater Schalter realisierbar. Eine bevorzugte Weiterbildung sieht vor, daß die Schaltmittel 18 durch eine Mehrfachbelegung eines bereits vorhandenen Schalters realisiert sind. Eine solche Mehrfachbelegung kann beispielsweise mit einer Zeitcodierung vorgenommen werden. Nach einer längeren Betätigung des betreffenden Schalters wird der Schalter dazu veranlaßt, als Schaltmittel 18 zu arbeiten.

Eine vorteilhafte Weiterbildung der erfindungsgemäßen Vorrichtung zum Steuern von motorisch betätigbaren Teilen 10, 16 sieht vor, daß ein Autoradio, das mit einer Antenne ausgestattet ist, die eines der motorisch betätigbaren Teile 10, 16 ist, nach der Ausgabe des zweiten Positionssollwerts Sn2, Sm2, der dem eingefahrenen Zustand der Antenne entspricht, eine Textmeldung ausgibt, die auf den neuen Zustand hinweist. Gegebenenfalls kann ein selbständiges Umschalten auf einen Kassetten- oder CD-Betrieb veranlaßt werden. Der Eingriff in das Autoradio verhindert undefinierte Betriebszustände des Autoradios und ermöglicht einen Hinweis an die Bedienperson.

## Patentansprüche

1. Vorrichtung zum Steuern von motorisch betätigbaren Teilen eines Kraftfahrzeugs, die jeweils in wenigstens zwei unterschiedliche Positionen bewegbar sind, mit Positionssollwertgebern zum Vorgeben von jeweils ersten Positionssollwerten, dadurch gekennzeichnet, daß Schaltmittel (18) vorgesehen sind zum Hin- und Herschalten zwischen den ersten Positionssollwerten (Sn1, Sm1) und zweiten, fest vorgegebenen Positionssollwerten (Sn2, Sm2).

2. Vorrichtung nach Anspruch 1, dadurch gekennzeichnet, daß die zweiten Positionssollwerte (Sn2, Sm2) Positionssollwerten entsprechen, bei denen eine Beschädigungswahrscheinlichkeit der motorisch betätigbaren Teile (10, 16) oder des Innenraums des Kraftfahrzeugs bei einer Kraftfahrzeugreinigung reduziert ist.

3. Vorrichtung nach Anspruch 1, dadurch gekennzeichnet, daß als motorisch betätigbare Teile (10, 16) wenigstens ein Außenspiegel vorgesehen ist.

4. Vorrichtung nach Anspruch 1, dadurch gekennzeichnet, daß als motorisch betätigbares Teil (10, 16) wenigstens eine Scheibe vorgesehen ist.

5. Vorrichtung nach Anspruch 1, dadurch gekennzeichnet, daß als motorisch betätigbares Teil (10, 16) ein Schiebedach vorgesehen ist.

6. Vorrichtung nach Anspruch 1, dadurch gekennzeichnet, daß als motorisch betätigbares Teil (10, 16) eine Antenne vorgesehen ist.

7. Vorrichtung nach Anspruch 6, dadurch gekennzeichnet, daß bei einem eingeschalteten Radiogerät und bei einer dem zweiten Positionssollwert (Sn2, Sm2), der dem eingefahrenen Zustand der Antenne entspricht, ein Eingriff in das Autoradio vorgesehen ist.

8. Vorrichtung nach Anspruch 1, dadurch gekennzeichnet, daß die Schaltmittel (18) als separater Schalter realisiert sind.

9. Vorrichtung nach Anspruch 1, dadurch gekennzeichnet, daß die Schaltmittel (18) als Mehrfachbelegung eines vorhandenen Schalters realisiert sind.

10. Vorrichtung nach Anspruch 1, dadurch gekennzeichnet, daß die Schaltmittel (18), wenigstens ein Positionssollwertgeber (11, 15) sowie wenigstens ein motorisch betätigbares Teil (10, 16) an wenigstens einer gemeinsamen Datenleitung (20) angeschlossen sind.
